# EUROPÄISCHE PATENTSCHRIFT

(11) **EP 1 443 868 B1**
(45) Veröffentlichungstag und Bekanntmachung des Hinweises auf die Patenterteilung: **17.01.2007**
(21) Anmeldenummer: 02803038.5
(22) Anmeldetag: 18.11.2002
(51) Int. Cl.: A61C 5/06, B05C 17/01, B01F 13/00, B01F 5/06

(54) **VORRICHTUNG ZUM LAGERN, MISCHEN UND AUSBRINGEN EINER FLIESSFÄHIGEN MASSE**
DEVICE FOR STORING, MIXING AND DISPENSING A FREE-FLOWING MATERIAL
DISPOSITIF DE STOCKAGE, DE MELANGE ET DE DISTRIBUTION D'UNE MASSE FLUIDE

(30) Priorität: 16.11.2001 DE 10156075
(43) Veröffentlichungstag der Anmeldung: 11.08.2004
(73) Patentinhaber: 3M ESPE AG, 82229 Seefeld (DE)
(72) Erfinder: PAUSER, Helmut, 86911 Diessen (DE); PEUKER, Marc, 86938 Schondorf (DE); HOHMANN, Arno, 81369 München (DE)
(86) Internationale Anmeldenummer: PCT/EP2002/012899
(87) Internationale Veröffentlichungsnummer: WO 2003/041605

(56) Entgegenhaltungen:
- EP-A- 0 407 805
- US-A- 4 808 184
- US-A- 6 065 645

## Beschreibung

Die Erfindung betrifft eine Vorrichtung, insbesondere zum Lagern und Ausbringen von Dentalmaterialien, umfassend eine Mischkammer und eine sich darin befindliche bestimmungsgemäß zusammendrückbare Mischwendel. Die Vorrichtung ermöglicht das weitgehend vollständige Ausbringen der in einer statischen Mischwendel beim Mischen verbleibenden Masse.
Zur Lagerung und zum Mischen einer mehrkomponentigen Zusammensetzung sind aus dem Stand der Technik unterschiedliche Systeme bekannt.

Zum einen gibt es sogenannte Mischkapseln, wie sie aus der EP 0 157 121 A1 bekannt sind. Die zu mischenden Komponenten werden hierbei aus unterschiedlichen Kompartimenten in eine Mischkammer überführt bzw. befinden sich teilweise bereits in ihr und werden mit Hilfe einer Schüttelvorrichtung gemischt. Durch Verschieben eines Kolbens in der Kapsel wird die Mischung schließlich über eine Tülle ausgebracht. Um zu gewährleisten, dass die Mischung möglichst vollständig aus der Kapsel ausgebracht werden kann, verfügen manche Kolben der Kapseln über Verdrängungskörper, die in die Tülle eingreifen können, vgl. DE 92 09 105 U. Die genannten Mischkapseln eignen sich zum Mischen von Pulvern mit Flüssigkeiten.

Bekannt sind auch Doppelkammerkartuschen, die zur Lagerung einer Basis- und einer Katalysatorkomponente dienen, wie sie beispielsweise in der EP 0 261 466 A1 beschrieben sind. Zum Ausbringen und Mischen wird auf diese Doppelkammerkartuschen ein Mischrohr aufgesteckt, in dem sich eine Mischwendel befindet, sog. statischer Mischer. Derartige statische Mischer sind aus der EP 0 664 153 A1, der EP 0 584 428 A1, der US 3,635,444 oder der US 3,923,288 bekannt. Durch wiederholte Strangteilung werden die beiden zu mischenden Komponenten im Verlauf des Ausbringens im Mischrohr miteinander gemischt. Nachteilig an dieser Vorrichtung ist, dass bei jedem Mischvorgang eine Restmenge an Material im Mischrohr verbleibt, die die gewünschte auszubringende Menge sogar manchmal übertreffen kann und ungenutzt mit dem statischen Mischer als Material-Totvolumen verworfen werden muss. Dies ist insbesondere dann nachteilig, wenn es sich um verhältnismäßig teure Materialien handelt. Eine Abwandlung der genannten statischen Mischer ist in der US 6,234,795 offenbart. In einer bestimmten Ausführungsform ist die Mischwendel aus einem flexiblen Material gefertigt, um die gemischte Masse vereinfacht an sonst schwierig zu erreichende Stellen applizieren zu können.

In der EP 0 407 805 A1 wird ein Verfahren und eine Vorrichtung zum Mischen, insbesondere von zahnärztlichen Abdruckmaterialien beschrieben.Die beschriebene Vorrichtung besteht aus einer die das Abdruckmaterial bildenen Komponenten aufnehmenden Applikationseinheit und einer Rotations und/oder Extrusionseinrichtung. Die Applikationseinheit weist einen im Mischraum höhenverfahrbaren Kolben auf.

Grundsätzlich ist es Aufgabe der vorliegenden Erfindung, eine Vorrichtung bereitzustellen, die die oben genannten Nachteile vermeidet.

Diese Aufgabe wird durch eine Vorrichtung, wie sie in den Ansprüchen beschrieben ist, und ein Verfahren zur Anwendung der Vorrichtung gelöst, wie es in den Ansprüchen beschrieben ist.

Die vorliegende Erfindung stellt eine Vorrichtung bereit, die es ermöglicht, unterschiedliche Substanzklassen innerhalb einer Verpackung zu lagern und nach Aktivierung der Vorrichtung als Mischung auszubringen, vorzugsweise um direkt an die gewünschte Stelle applizieren zu können.

Die vorliegende Erfindung stellt außerdem eine Vorrichtung bereit, in der verhältnismäßig kleine Mengen an fließfähigen Komponenten gelagert, gemischt und ausgebracht werden können, wobei die Menge an nach Gebrauch zu verwerfendem Material möglichst gering ausfallen soll.

Die vorliegende Erfindung stellt darüber hinaus eine Vorrichtung bereit, die das Mischen von fließfähigen Materialien, insbesondere den zeitlichen Aufwand von der Bereitstellung der zu mischenden Substanzen bis zur gemischten Masse, verkürzt.

Die Erfindung weist unter anderem folgende Vorteile auf:

Dadurch, dass die Mischwendel sich im Mischrohr zusammendrücken bzw. komprimieren lässt, kann sichergestellt werden, dass das sich im Mischrohr befindliche Material weitgehend vollständig aus dem Mischrohr ausgebracht werden kann. Dies ist insbesondere bei vergleichsweise teuren Substanzen vorteilhaft.

Eine Ausbildung der Vorrichtung dergestalt, dass Stempel, Kartusche und Mischrohr ineinander greifen und von der Länge aufeinander abgestimmt sind, erlaubt es, das Volumen der Vorrichtung nach dem Gebrauch auf ein Minimum zu reduzieren.

Die Vorrichtung umfasst vergleichsweise wenig Einzelteilen, je nach Ausführungsform vorzugsweise zwei bis zehn, vorzugsweise drei bis sechs, und kann dadurch verhältnismäßig kostengünstig gefertigt werden.

Die Vorrichtung gemäß dieser Ausführungsform zeichnet sich folglich dadurch aus, dass getrennt zu lagernde Substanzen bzw. Komponenten einer herzustellenden Mischung innerhalb einer Verpackung, insbesondere zur Einmalverwendung, zum Ausbringen bzw. Mischen hergerichtet vorliegen.

Weiterhin ist sichergestellt, dass alle in der Vorrichtung gelagerten Substanzen das gleiche Abfülldatum aufweisen, sodass Inkompatibilitäten der Substanzen aufgrund unterschiedlicher Verfallzeiten ausgeschlossen werden können.

Hinzu kommt, dass zur Anwendung der Vorrichtung in Form einer Einmalapplikation keine Desinfektion erforderlich ist.

Bedingt durch die teleskopartige Anordnung der einzelnen Bestandteile verbunden mit dem vergleichsweise kleinen Durchmesser der Kartusche der Vorrichtung ergeben sich für die Handhabung günstige Ausdrückkräfte, selbst bei höheren Pastenviskositäten.

Die zur Aktivierung und Handhabung der Vorrichtung aufzubringenden Kräfte liegen üblicherweise im Bereich von 1 bis 150 N , vorzugsweise im Bereich von 10 bis 100 N. Für den Fall, dass das Mischrohr über eine Kartuschenapplikationsvorrichtung, die über einen zusätzlichen Stempel verfügt, entleert werden soll oder muss, können die Ausdrückkräfte bis auf etwa 2000 N ansteigen.

Mit den Begriffen "umfassen" oder "enthalten" im Sinne der Erfindung wird eine nicht abschließende Aufzählung von Merkmalen eingeleitet. Der Begriff "ein" ist als unbestimmte Mengenangabe im Sinne "mindestens ein" aufzufassen.

Unter der Bezeichnung "rohrförmiges Element, das sich zu einem Ende hin im Durchmesser verengt", ist ein im wesentlichen zylinderförmiger Hohlkörper mit zwei Öffnungen zu verstehen, dessen eines Ende vorzugsweise vergleichsweise spitz zuläuft. Gegebenenfalls weist das rohrförmige Element im Bereich dieses Endes eine Krümmung auf, die vorzugsweise einen konstanten in etwa dem Austrittsquerschnitt entsprechenden inneren Strömungsquerschnitt besitzt, um das Totvolumen in diesem Bereich zu minimieren. Das rohrförmige Element begrenzt im wesentlichen die Mischkammer und wird im Folgenden auch als "Mischrohr" bezeichnet.

Weitere Merkmale und Ausführungen der Erfindung sind in den Unteransprüchen beschrieben.

Die in der vorliegenden Erfindung zum Einsatz kommende Mischwendel weist üblicherweise einzelne Mischelemente auf, die die Mischung der in die Mischkammer eintretenden Massen durch Strangteilung ermöglichen. Geeignete Mischwendeln von der verwendbaren Form her sind in EP 0 664 153 A1, EP 0 584 428 A1, US 3,635,444 oder US 3,923,288 beschrieben. Zum Funktionieren der vorliegenden Erfindung sind diese Mischwendeln aber derart auszubilden, dass sie bestimmungsgemäß zusammengedrückt werden können.

Unter dem Begriff "zusammendrückbar" ist erfindungsgemäß die Ausbildung der Mischwendel dahingehend zu verstehen, dass sich insbesondere deren axiale Länge durch Ausübung vorzugsweise von händischem Druck, gegebenenfalls aber auch unter Zuhilfenahme von zusätzlichen Applikationsvorrichtungen mittels eines Kolbens verringern lässt. Hierbei sollte aber vermieden werden, dass die Mischwendel beim Zusammendrücken in viele kleine Einzelbestandeile zerbricht und diese Einzelbestandteile zusammen mit der Mischung ausgebracht werden.

Die Mischwendel ist vorzugsweise auch derart ausgebildet, dass der Vorgang des Zusammendrückens bzw. der Stauchung von dem Ende der Mischwendel erfolgt, welches dem Kolben zugewandt ist.

Erfindungsgemäß umfasst der zum Ausbringen der Mischung verwendete Kolben im wesentlichen zwei Hauptbestandteile, einen gegebenenfalls geteilten Stempel und eine zum Stempel passende Kartusche.

Die Kartusche ist geeignet, mindestens zwei, gegebenenfalls drei oder vier Komponenten einer zu bereitenden Mischung getrennt voneinander zu lagern. Um dies zu gewährleisten, verfügt die Kartusche gegebenenfalls über mindestens eine Trennwand, die vorzugsweise durch die Symmetrieachse der Kartusche verläuft. In Abhängigkeit der Verhältnisse der zu mischenden Substanzen und der hierfür erforderlichen Lagervolumina kann die Trennwand aber auch außermittig in der Kartusche angeordnet sein. Denkbar ist auch, dass die Trennwand im Inneren einen Hohlraum aufweist. Dies erschwert eine gegebenenfalls stattfindende Permeation von in den Kammern der Kartusche gelagerten Substanzen durch die Trennwand hindurch und verbessert somit die Lagerstabilität.

Um ein komplikationsfreies Funktionieren der Vorrichtung beim Mischen sicherzustellen, sollte die Viskosität der zu mischenden Komponenten bzw. der Mischung auf die Eigenschaften der Mischwendel, insbesondere auf deren Fähigkeit sich zusammendrücken zu lassen, abgestimmt sein.

Ferner ist es von Vorteil, wenn der Stempel über Elemente zur Dichtung verfügt, die verhindern, dass das in den Mischraum zu überführende Material an anderen Stellen aus der Kartusche austritt.

Von Vorteil ist auch, wenn in dem Mischrohr und/oder an der Kartusche Retentionselemente vorhanden sind. Diese stellen sicher, dass bei Aktivierung der Vorrichtung durch Ausüben von Druck auf den Stempel, dieser zunächst in der Kartusche axial vorwärts bewegt wird, und nicht die Kartusche die Mischwendel zusammendrückt, bevor das Material in den Mischraum überführt wurde.

Zur Erleichterung der händischen Handhabung der Vorrichtung hat es sich auch bewährt, wenn diese über Halteelemente bzw. Fingerplatten, vergleichbar einer Spritze, verfügt, die je nach Größe der Vorrichtung und Anwendungszweck an unterschiedlichen Stellen angebracht sein können. Vorteilhafterweise befinden sich diese Halteelemente im Bereich der dem Kolben zugewandten Öffnung des Mischrohrs und/oder im Bereich der dem Stempel zugewandten Öffnung der Kartusche.

Insbesondere bei Vorrichtungen, die bedingt durch ihre axiale Länge nicht mit einer Hand in einem Zug aktiviert werden können, hat sich eine stufen- bzw. schrittweise Aktivierung als vorteilhaft erwiesen. In einem ersten Schritt werden hierbei die zu mischenden Substanzen in die Mischkammer überführt, indem der Stempel in die Kartusche gedrückt wird, wobei Stempel und Kartusche üblicherweise wie eine Spritze gehalten werden. Im zweiten Schritt wird nach einem etwaigen Umgreifen auf die sich am Mischrohr befindliche Fingerplatte schließlich der aus Stempel und Kartusche gebildete Kolben in das Mischrohr gedrückt, wobei die Vorrichtung ebenfalls wie eine Spritze betätigt wird.

In einer anderen Ausführungsform kann die Kartusche auch in Gestalt eines Multilumenschlauchs vorliegen.

Vorzugsweise kommt eine harte Kartusche in Gestalt eines Multilumenschlauchs als Mehrkammerkartusche zum Einsatz, die bei Ausübung von Druck in Axialrichtung auch ohne Anbringen von Halteelementen beim Aktivieren belastbar ist.

Es kann aber auch von Vorteil sein, einen elastischen Multilumenschlauch als Mehrkomponentenkartusche zu verwenden, der zum Entleeren an seinem stempelseitigen Ende mit einer Haltevorrichtung bzw. Fingerplatte versehen ist. Die bei dieser Dichtpaarung vorzugsweise an den Stempelenden befindlichen Dichtwulste dichten gegen die in diesem Fall elastische Mehrkomporientenkartusche ab.

Die elastische Kartusche wird beim Aktivieren bzw. Entleeren durch den vergleichsweise steifen Stempel hierbei nur auf Zug beansprucht wird. Gegebenenfalls kann zu Lager- und Transportzwecken der Multilumenschlauch umgebogen werden bzw. vorliegen. Hierdurch tritt eine nicht unbeträchtliche Längenreduktion ein, die insbesondere bei der Lagerung in einem Siegelrandbeutel aus Aluminiumverbundfolie von Vorteil sein kann.

Ebenfalls vorteilhaft ist es, wenn die Kartusche über Elemente zur Abdichtung (Dichtelemente) verfügt, um zu verhindern, dass die in der Kartusche gelagerten Substanzen austrocknen oder unkontrolliert in den Mischraum eintreten und gegebenenfalls vorzeitig miteinander reagieren.

Diese Elemente weisen gegebenenfalls durch Torsion um die Kartuschenlängsachse reversibel zu verschließende bzw. zu öffnende Bohrungen oder Durchgangslöcher beliebigen Querschnitts auf (beispielsweise nach Art eines Twist-Verschlusse bzw. ggf. in Form eines verdrehten Schlauchs oder einer Drehschieberanordnung), durch die die in der Kartusche gelagerten Substanzen bei Ausübung von Druck auf den Stempel in die Mischkammer überführt werden können.

Um ein reversibles Verschließen bzw. Öffnen der Kartusche nach Art eines Twist-Verschlusses auf sichere Weise zu gewährleisten, hat es sich als vorteilhaft erwiesen, das bzw. die Elemente zur Abdichtung mit einer Nut zu versehen. Diese greift als Gegenlager in einen oder mehrere vorzugsweise achsparallel sich vorzugsweise innerhalb an dem Mischrohr befindlichen Vorsprünge, Nasen, Ausbuchtungen oder Stufen an.

Alternativ kann es auch ausreichen, die zur Herstellung der Kartusche, des Elements zur Abdichtung und des Mischrohrs verwendeten Materialien so aufeinander abzustimmen, dass durch Reibung oder Reibschluss ein Halten der gewünschten Position des Elements zur Abdichtung im Mischrohr gewährleistet werden kann.

Der gleiche Effekt kann dadurch gewährleistet werden, die Querschnitte des Mischrohrs und des Elements zur Abdichtung aufeinander abzustimmen, beispielsweise durch Ausbildung mit Drei-, Vier- , Fünf- oder Sechskantprofil.

Ein nach Art eines Twist-Verschlusses ausgebildetes Element zur Abdichtung ermöglicht es, die Vorrichtung als Multi-Dose-Vorrichtung zu handhaben. Nach Abgabe einer bestimmten Substanzmenge aus der Vorrichtung lässt sich die Kartusche erneut verschließen.

Eine derartige Verwendung umfasst üblicherweise folgende Schritte:
a) Öffnen der Kartusche durch Drehen der Kartusche im Mischrohr,
b) Teilentleerung der in der Kartusche gelagerten Masse in das Mischrohr,
c) Verschließen der Kartusche durch Drehen der Kartusche im Mischrohr,
d) Ausbringen der Masse aus dem Mischrohr durch Axialverschiebung des Stempels, wobei die Mischwendel zusammengedrückt wird,
e) entgegengesetzte Axialverschiebung des Stempels, wobei die zusammengedrückte Mischwendel im wesentlichen wieder ihre Ausgangsform annimmt,
f) gegebenenfalls Wiederholung zumindest der Schritte a) bis d) bis die Kartusche im wesentlichen entleert ist.

Zur Vermeidung des Verschlusses des Mischrohrs durch die auszubringende Masse bei der oben beschriebenen Mehrfachanwendung, ist es von Vorteil, wenn die Mischwendel sich im wesentlichen bis unmittelbar an das Ausbringende erstreckt bzw. die Tülle entsprechend kurz gestaltet ist.

Je nach Ausführungsform der verwendeten Kartusche kann es sich bei den Dichtelementen vorzugsweise um halbkreisförmige, kurze Zylindersegmente handeln, die sich zwischen Mischwendel und Kartusche befinden und mit ihren kartuschenseitigen Enden die jeweilige Kammer abdichten, gegebenenfalls an die Mischwendel einstückig und/oder an die Kartusche, gegebenenfalls im 2K-Spritzgußverfahren angeformt sind oder separat als Einzel- oder Mehrfachstöpsel vorliegen. Sobald die zu mischenden Substanzen in die Mischkammer überführt wurden und der Stempel in die Mischkammer eingeführt wird, bildet der Stempel während des weiteren Ausbringvorgangs zusammen mit dem Dichtelement eine Art Kolben, mit dem die Mischwendel zusammengedrückt wird.

Diese Ausführungsform kann durch ein von der Kartusche lösbares Dichtelement und eine feste Verbindung zwischen Mischrohr und Kartusche auch so abgewandelt werden, dass die Kartusche, die die zu mischenden Substanzen enthalten hat, während des Ausbringvorgangs nicht in das Mischrohr vorgeschoben wird bzw. werden kann. Dies ist insbesondere dann von Vorteil, wenn vorzugsweise Kleinstmengen mit der Vorrichtung verabreicht werden sollen und es erforderlich ist, eine Mindestlänge der Vorrichtung bereitzustellen.

Um ein weitgehend vollständiges Ausbringen der gemischten Substanzen sicher zu stellen, sollte bei dieser Ausführungsform der Stempel axial im wesentlichen eine Länge aufweisen, die mindestens oder etwa so groß ist, wie die Länge von dem Mischrohr und der Kartusche abzüglich der Länge, die die zusammengeschobene Mischwendel einnimmt.

Die Kartusche kann aber auch auf andere Weise abgedichtet sein, beispielsweise durch eine vergleichsweise dünne Membran, die beim Aktivieren der Vorrichtung durch sich in der Kartusche aufbauenden Überdruck zum Platzen oder von der Mischwendel geöffnet, durchstoßen oder angestochen wird. Denkbar ist auch eine Ausführungsform bei der die Kartusche durch an die Mischwendel angeformte oder separate Einzel- oder Mehrfachverschlusselemente verschlossen ist. Das Öffnen der Kartusche erfolgt ebenfalls durch einen sich in dieser bei Eindringen des Stempels aufbauenden Überdruck.

Um ein ungewolltes Aktivieren der Vorrichtung zu verhindern, sind die einzelnen Bestandteile der Vorrichtung vorteilhafterweise gegen ein Ineinanderschieben gesichert. Geeignete Elemente zur Sicherung umfassen Spangen, Klammern, Twist-Verschlüsse, Retentionselemente, Gewinde und/oder Bajonett-Sicherungen.

Denkbar ist es auch, die erfindungsgemäße Vorrichtung, umfassend das Mischrohr mit kollabierbarer Mischwendel, auf übliche Doppelkartuschen, wie sie in der Einleitung unter Verweis auf andere Dokumente beschrieben sind, anstelle der dort beschriebenen statischen Mischkanülen aufzustecken. Damit bei dieser Ausführungsform ebenfalls sichergestellt ist, dass das Mischrohr entleert werden kann, sind neben gegebenenfalls jeweils seitlich am Mischrohr einmündenen Pastenzuführungen zusätzliche Modifikationen an der für derartige Doppelkammerkartuschen benötigen Applikationsvorrichtungen nötig. Erforderlich ist das Anbringen eines zusätzlichen Stempels, der von den beiden anderen Stempeln, die zur Pastenförderung benötigt werden, entkoppelt ist und der sich vorzugsweise zwischen den beiden Kartuschen befindet. Wenn die Pastenförderung aus der Kartusche abgeschlossen ist bzw. die vom Anwender gewünschte Menge an Substanz ausgebracht ist, lässt sich die Mischkanüle unter Zuhilfenahme der Applikationsvorrichtung, die einen Stempel aufweist, entleeren.

Weiterhin denkbar ist auch, die erfindungsgemäße Vorrichtung, umfassend das Mischrohr mit kollabierbarer Mischwendel, mit zwei vorzugsweise parallel zum Mischrohr angeordneten Kartuschen zu verbinden. Eine derartige Anordnung umfasst neben der erfindungsgemäßen Vorrichtung somit zwei Behältnisse zur Lagerung zweier zu mischender Substanzen, die über Öffnungen in das Mischrohr vollständig oder teilweise entleert werden können, vorzugsweise über in den Behältnissen verschiebbare Kolben. Die Öffnungen hierzu befinden sich vorzugsweise seitlich am Mischrohr. Das Mischrohr selbst wird über einen in dieses eindringenden Stempel entleert.

Die Vorrichtung eignet sich zur getrennten Lagerung, zum Mischen und zum Ausbringen von mindestens zwei Komponenten einer zu bereitenden Mischung.

Die auszubringenden Mischungen können sein: Klebstoffe, Dentalmaterialien, wie dentale Abformmassen, Füllungsmaterialien, Zemente, Adhäsive.

Bei den zu applizierenden Substanzen handelt es sich üblicherweise um fließfähig, gegebenenfalls knetbare Substanzen. Vorzugsweise sind die Substanzen polymerisierbar.

Ebenso können alle im Dentalbereich gängigen restaurativen und/oder prothetischen Substanzen wie Composite, Compomere, Ormocere, pastenförmige Glasionomerzemente Silikatzemente, Phosphatzemente in die Vorrichtung gefüllt werden.

Die Komponenten bzw. die Mischungen weisen üblicherweise eine Viskosität im Bereich von 0,5x10⁻³ bis 50x10³ Pas, vorzugsweise von 1x10⁻³ bis 10x10³ Pas auf.

Das applizierbare Volumen der Mischung liegt üblicherweise im Bereich von einigen Millilitern, beispielsweise im Bereich von 0,05 bis 50 ml, vorzugsweise im Bereich von 0,2 bis 20 ml.

Das Volumen der Kammern ergibt sich aus dem jeweiligen Mischungsverhältnis.

Das Volumenverhältnis der Kammern der Kartusche liegt im Bereich von 1:1 bis 1:30, vorzugsweise im Bereich 1:1 bis 1:10.

Die Vorrichtung lässt sich beispielsweise durch Spritzgießen der einzelnen Bestandteile, in Abhängigkeit der verwendeten Kunststoffe oder deren Mischungen herstellen. Stempel und gegebenenfalls vorhandene Dichtungen am Stempel bzw. Mischwendel und/oder Dichtelemente und Kartuschen lassen sich beispielsweise durch ein 2K-Spritzverfahren herstellen. Es bieten sich vorzugsweise folgende Kombinationen für ein 2K-Spritzverfahren an: a) Mischwendel, Dichtelemente, Kartusche, b) Mischwendel, Dichtelemente, c) Mischwendel, Kartusche und/oder d) Dichtelemente, Kartusche.

Da es sich hierbei um ein vergleichsweise kostengünstiges Herstellungsverfahren unter Verwendung vergleichsweise billiger Rohstoffe handelt, eignet sich die Vorrichtung insbesondere als Einmalapplikationseinheit bzw. single-unit-dose.

Kunststoffe, die sich zur Herstellung der Vorrichtung und auch der ggf. als Kartusche zu verwendbaren Multilumenschläuche grundsätzlich eignen, sind beispielsweise: PE, PP, PTFE, PET, PA, PBT, PVC, PVDC, EVA, PVF (Polyvinylfluorid), COC, PS, PPA, PC, LCP, POM, ABS, PEN, EVOH, PAN, PCTFE, PFA, FEP, TFF, PVDF, ETFE.

Die Mischwendel weist üblicherweise im Bereich von 2 bis 40 Mischelemente auf. Geeignete Materialien zur Herstellung der Mischwendel sind: thermoplastische Polyether-Blockamide (TPE-A), thermoplastische Copolyester (TPE-E), thermoplastische Polyolefine (TPE-O), thermoplastische Styrolcopolymere (SBS), thermoplastische Polyurethane (TPU), ferner Thermoplaste wie PVC, PE, PUR.

Die Mischwendel ist vorzugsweise aus einem elastischem und/oder sprödem Material gefertigt und/oder umfasst Sollbruchstellen. Mischwendeln, die ein elastisches Material umfassen, weisen üblicherweise einen Elastizitätsmodul im Bereich von Shore-Härte A 40 bis D 80, vorzugsweise im Bereich von A 70 bis D 60 auf.

Die Vorrichtung ist in Abhängigkeit von der in der Vorrichtung gelagerten Substanzen selbst gegebenenfalls in eine Blisterverpackung abgepackt.

Es kann vorgesehen sein, dass der Stempel einen vorderen Abschnitt und einen hinteren Abschnitt aufweist. Dadurch kann leicht eine platzsparende Anordnung des Stempels in einer Verpackung erzielt werden, indem der hintere Abschnitt zum Beispiel parallel neben das Mischrohr oder die Kartusche gelegt wird. Nach dem Auspacken werden als Erstes die beiden Abschnitte zu dem Stempel zusammengesetzt, so dass die Vorrichtung dann wie gewohnt eingesetzt werden kann.

Der Stempel kann aber auch noch weitere Abschnitte aufweisen.

Es kann vorgesehen sein, dass die Abschnitte voneinander getrennte Teile sind.

Dann kann vorgesehen sein, dass der vordere Abschnitt in dem hinteren Ende der Kartusche sitzt, und dass der hintere Abschnitt über wenigstens eine Brechverbindung mit der Kartusche und/oder dem Mischrohr verbunden ist. Dadurch ist es möglich, dass der hintere Abschnitt zusammen mit der mit ihm verbundenen Kartusche und/oder dem mit ihm verbundenen Mischrohr hergestellt wird, wie zum Beispiel durch Spritzgießen.

Außerdem kann vorgesehen sein, dass der hintere Abschnitt mit dem hinteren Ende der Kartusche über eine Brechverbindung verbunden ist, die als Scharnier ausgebildet ist und bricht, während die beiden Abschnitte zu dem Stempel zusammengesetzt werden oder während der aus den beiden Abschnitten zusammengesetzte Stempel in die Kartusche gedrückt wird. Das Scharnier erleichtert das Zusammenführen der beiden Abschnitte beim Zusammensetzen des Stempels.

Es kann vorgesehen sein, dass die Abschnitte an ihren einander zugewandten Enden miteinander verbunden sind. Die Abschnitte können zusammen hergestellt werden, wie zum Beispiel durch Spritzgießen.

Dann kann vorgesehen sein, dass die Abschnitte an ihren einander zugewandten Enden klappbar miteinander verbunden sind.

Außerdem kann vorgesehen sein, dass die Abschnitte über ein Filmscharnier miteinander verbunden sind.

Es kann vorgesehen sein, dass die Abschnitte an ihren einander zugewandten Enden korrespondierende Kopplungselemente aufweisen.

Dann kann vorgesehen sein, dass die Kopplungselemente eine Schraubverbindung oder eine Bajonettverbindung oder eine Steckverbindung ermöglichen. Für eine Steckverbindung können die Kopplungselemente zum Beispiel konisch oder keilförmig ausgebildet sein.

Außerdem kann vorgesehen sein, dass an den einander zugewandten Enden Rückhaltemittel vorgesehen sind, die ein Lösen der gekoppelten Enden erschweren.

Dann kann vorgesehen sein, dass die Rückhaltemittel Rastelemente aufweisen. Die Rastelemente können zum Beispiel Nasen oder Haken umfassen. Es sind aber auch andere Rückhaltemittel möglich, wie zum Beispiel Riffelungen, an den aneinander anliegenden Flächen der Enden.

Es kann vorgesehen sein, dass der vordere Abschnitt einen Stopfen aufweist, der dicht in dem hinteren Ende der Kartusche sitzt. Der vordere Abschnitt kann ganz oder teilweise als Stopfen ausgebildet sein. Der Stopfen kann, um die gewünschte Abdichtung der Kartuschenkammer zu erreichen, aus einem weicheren und/oder elastischeren Material bestehen als der Rest des Abschnitts oder als der hintere Abschnitt. Der Stopfen und der Rest des Stempels, also der hintere Abschnitt und gegebenenfalls der Rest des vorderen Abschnitts, können durch 2K-Spritzgießen hergestellt werden.

Es kann vorgesehen sein, dass der hintere Abschnitt an seinem hinteren Ende eine Daumenplatte mit einer Aussparung für die Kartusche aufweist. Dadurch kann der hintere Abschnitt in der Verpackung platzsparend eng neben die Kartusche gelegt werden.

Außerdem kann vorgesehen sein, dass das Mischrohr an seinem hinteren Ende eine Fingerplatte mit einer Aussparung für den hinteren Abschnitt aufweist. Dadurch kann der hintere Abschnitt in der Verpackung platzsparend eng neben das Mischrohr gelegt werden.

Dann kann vorgesehen sein, dass die Aussparung als Klemmhalterung ausgebildet ist. Dadurch kann die Kartusche an dem hinteren Abschnitt beziehungsweise der hintere Abschnitt an dem Mischrohr festgeklemmt werden.

Es kann vorgesehen sein, dass die Steifigkeit der Mischwendel über deren Länge variiert, indem zum Beispiel die Mischwendel in einem vorderen Bereich steifer ist als in einem hinteren Bereich. Dadurch wird eine progressive Kraft-Weg-Kennlinie beim Zusammendrücken erzielt, so dass die Mischwendel von hinten nach vorn zusammengedrückt wird.

Dann kann vorgesehen sein, dass die Mischwendel in einem vorderen Bereich eine größere Wandstärke hat als in einem hinteren Bereich. Bei über die Länge gleich bleibenden Materialeigenschaften nimmt also die Steifigkeit der Mischwendel von hinten nach vorne zu. Außerdem verengt sich der Durchflussquerschnitt im Mischrohr von hinten nach vorne auf Grund der zunehmenden Wandstärke, was den Mischeffekt begünstigen kann.

Es kann vorgesehen sein, dass die Mischwendel an ihrem hinteren Ende an dem Mischrohr und/oder an der Kartusche befestigt ist. Dadurch wird eine Druckentlastung für die Mischwendel geschaffen, auf die ja bereits beim Ausbringen der Masse aus der Kartusche in das Mischrohr durch die nach vorne gerichtete Massenströmung eine nach vorne gerichtete Axialkraft wirkt, die versucht, die Mischwendel zu stauchen. Da also die Befestigung wenigstens einen Teil der Axialkraft aufnimmt, kann die Eigensteifigkeit der Mischwendel entsprechend geringer sein, was auch für die Kraft gilt, die zum Ausbringen der gemischten Masse aus dem Mischrohr aufgebracht werden muss und mit der Eigensteifigkeit sinkt. Die Befestigung an dem Mischrohr erfolgt bevorzugt über eine Brechverbindung, die erst dann gebrochen wird, wenn das Ausbringen der Masse beendet ist und nun die Kartusche in das Mischrohr gedrückt wird, um die Mischwendel zu stauchen. Hingegen muss die Befestigung an der Kartusche nicht lösbar sein, da beim Stauchen der Mischwendel sich ja ihr hinteres Ende zusammen mit der Kartusche nach vorne bewegt.

Es kann außerdem vorgesehen sein, dass die Mischwendel sich mit ihrem vorderen Ende an dem Mischrohr abstützt. Dadurch kann ein Blockieren oder Verstopfen der sich verjüngenden Auslassöffnung oder Tülle des Mischrohrs verhindert werden, da nun die Mischwendel auch beim Stauchen im Mischrohr bleibt.

Dieses Abstützen kann zum Beispiel dadurch erzielt werden, dass die Mischwendel an ihrem vorderen Ende an dem Mischrohr befestigt ist.

Ein anderes Beispiel sieht vor, dass das Mischrohr einen von seiner Innenfläche radial einwärts vorspringenden Anschlag für das vordere Ende der Mischwendel aufweist. An diesem Anschlag kann sich die Mischwendel beim Stauchen dann mit ihrem vorderen Ende abstützen. Der Anschlag ist bevorzugt ein ringförmiger Kragen oder Flansch.

Es ist auch möglich, dass am vorderen Ende der Mischwendel ein Ring ausgebildet ist, der beim Stauchen gegen die sich verjüngende Innenfläche des Mischrohrs gedrückt wird und eine weitere Vorwärtsbewegung der Mischwendel blockiert. Dies kann auch dadurch erreicht werden, dass eines der vorderen Mischpaddel der Mischwendel besonders dick oder steif ausgebildet ist, so dass es beim Stauchen nicht zu stark verformt wird.

Gegenstand der vorliegenden Erfindung ist auch ein Verfahren zur Verwendung der Vorrichtung, welches folgende Schritte umfasst:
a) Bereitstellen einer Vorrichtung wie sie oben beschrieben ist,
b) Ausbringen der in der Kartusche gelagerten Komponenten bzw. Substanzen durch Ausübung von Druck auf den in der Kartusche führbaren Stempel in das Mischrohr, wobei es dort, bedingt durch die Mischwendel, zu einer wiederholten Strangteilung der zu mischenden Komponenten kommt, und
c) Verwenden des Stempels gegebenenfalls zusammen mit der Kartusche als Kolben zum Ausbringen der im Mischrohr befindlichen Komponenten.

Im Folgenden werden verschiedene Ausführungsformen der Erfindung beispielhaft an Hand der beigefügten Zeichnungen näher beschrieben.
- FIG. 1: ist eine Explosionsdarstellung einer Vorrichtung;
- FIG. 2: ist eine Seitenansicht der Vorrichtung der FIG. 1 im nichtaktivierten Zustand;
- FIG. 3: zeigt die Vorrichtung der FIG. 2 im entleerten Zustand;
- FIG. 4: ist eine Seitenansicht einer Vorrichtung mit einem Stempel in einer ersten Ausführungsform, der platzsparend zusammengeklappt ist;
- FIG. 5: ist eine Schnittansicht längs der Linie IV-IV in der FIG. 4;
- FIG. 6: zeigt die Vorrichtung der FIG. 4, deren Stempel teilweise aufgeklappt ist;
- FIG. 7: ist eine Seitenansicht einer Vorrichtung mit einem Stempel in einer zweiten Ausführungsform, der platzsparend neben der Kartusche liegt; und
- FIG. 8: ist eine vergrößerte Seitenansicht einer Vorrichtung mit einem Stempel in einer dritten Ausführungsform, der beinahe vollständig zusammengesetzt ist.

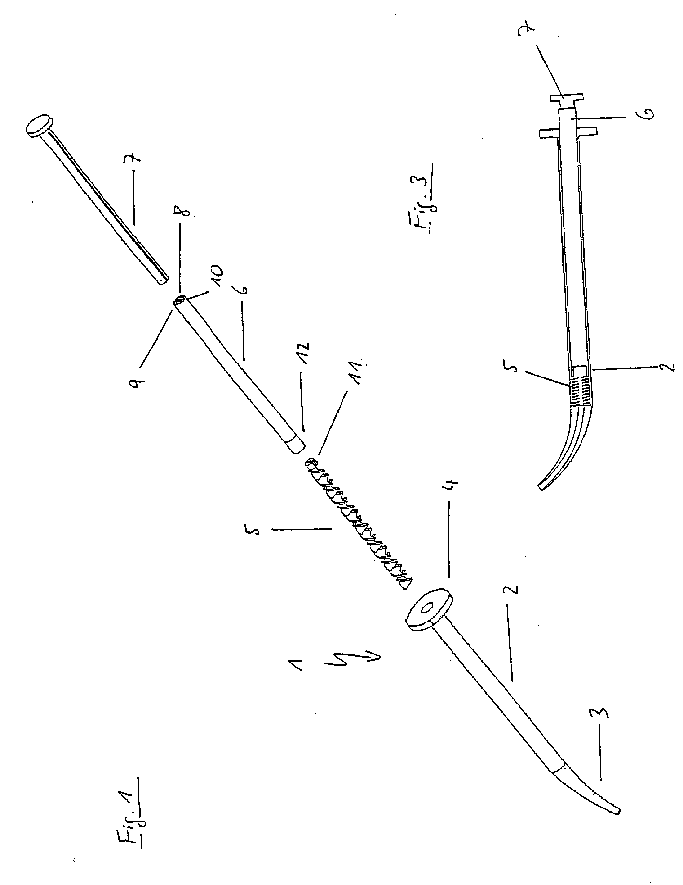

FIG. 1 zeigt die erfindungsgemäße Vorrichtung 1 in einer Explosionsdarstellung. Die Vorrichtung weist ein rohrförmiges Element oder Mischrohr 2 auf, das sich zum Ende hin verjüngt bzw. in einer gebogenen Tülle 3 endet. Am anderen Ende des Mischrohrs 2 befindet sich eine Anformung 4, beispielsweise in Form einer Platte mit einer Bohrung, die zum Fixieren bzw. Halten der Vorrichtung beim Ausbringen dient. In dem Mischrohr 2 befindet sich eine Mischwendel 5. Die Mischwendel 5 kann bestimmungsgemäß durch einen Kolben, der aus einer Kartusche 6 und einem Stempel 7 gebildet wird, zusammengedrückt werden. Die Kartusche 6 weist eine Trennwand 8 auf, die die Kartusche in zwei Kammern 9 und 10 teilt. Die Kartusche ist röhrenförmig und an beiden Enden offen ausgebildet. In die Kartusche 6 kann ein gegebenenfalls zwei- oder mehrfachgeteilter Stempel 7 geschoben werden. Die Dimension des Stempels 7 ist derart, dass er geeignet ist, die in der Kartusche 6 gelagerten Materialien vollständig auszubringen. An die Mischwendel 5 sind Verschluss- bzw. Dichtelemente 11 zum Verschließen der Kartusche 6 angeformt. Die Kartusche 6 weist im vorderen Bereich Retentionselemente 12 auf, die unterstützend bewirken, dass beim Aktivieren zunächst der Stempel 7 in die Kartusche 6 gedrückt wird, bevor die Kartusche zusammen mit dem Stempel in das Mischrohr 2 eindringt.

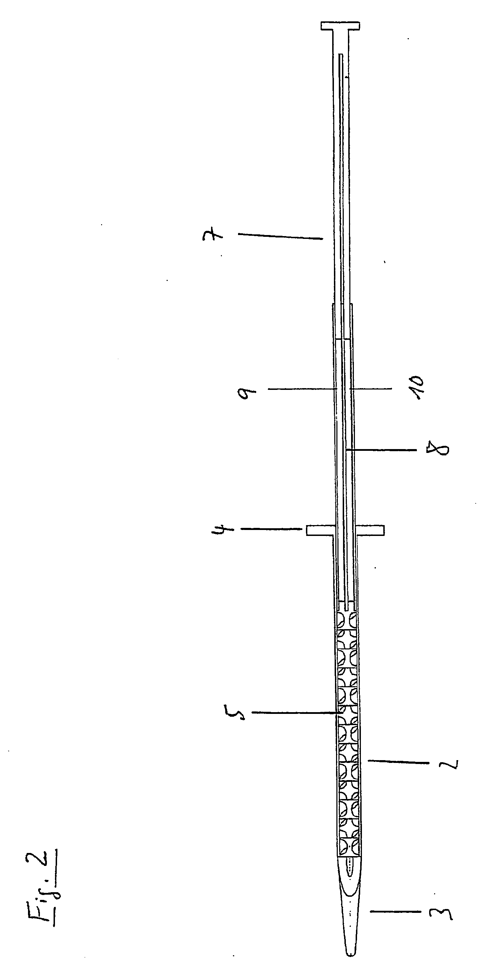

FIG. 2 zeigt die erfindungsgemäße Vorrichtung im Längsschnitt in nicht aktivierter Form. Der segmentierte Stempel 7 greift teleskopartig in die längsgeteilte Kartusche 6 ein, welche ihrerseits in das Mischrohr 2 teleskopartig eingreift.

In der in FIG. 3 gezeigten Vorrichtung in Seitenansicht wurde mittels des Stempels 7 das sich in der Kartusche 6 befindliche Material in den Mischraum des Mischrohrs 2 ausgebracht und die Mischwendel 5 durch den aus Stempel 7 und Kartusche 6 gebildeten Kolben zusammengedrückt.

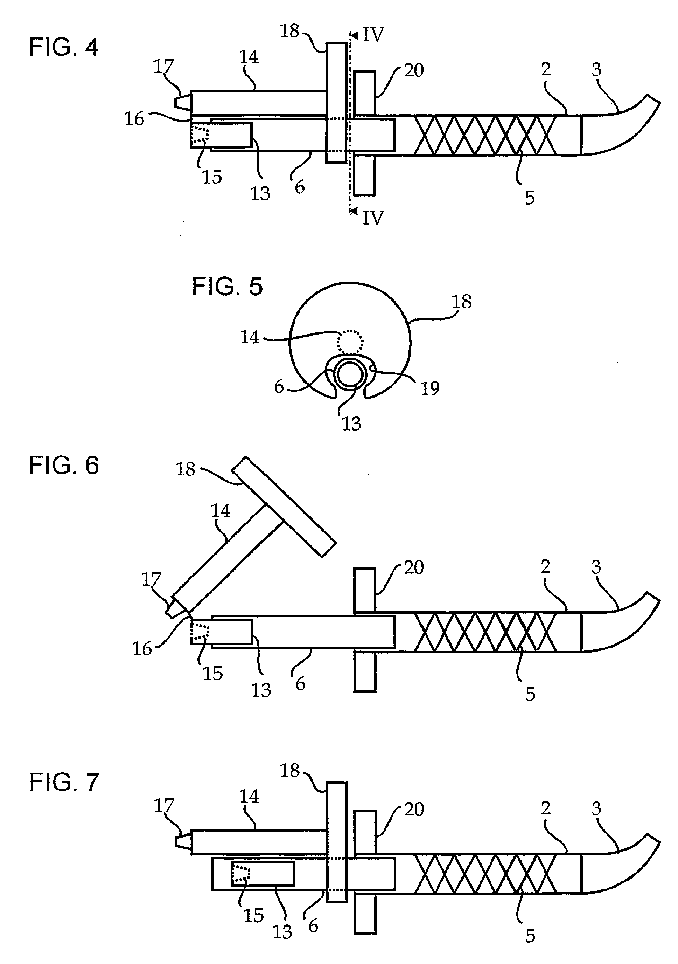

Die FIG. 4 zeigt eine Vorrichtung mit einem Stempel 7 in einer ersten Ausführungsform, der einen vorderen Abschnitt 13 und einen hinteren Abschnitt 14 aufweist.

Der vordere Abschnitt 13 sitzt mit seinem vorderen Ende (rechts in der FIG. 4), das als Stopfen ausgebildet ist und aus einem elastischen Material besteht, dicht in dem hinteren Ende (links in der FIG. 4) der Kartusche 6. Der Rest des vorderen Abschnitts 13 ist hingegen aus einem im Vergleich zum Stopfen härteren Material, und das hintere Ende (links in der FIG. 4) des vorderen Abschnitts 13 ragt aus der Kartusche 6 heraus und weist in seiner Stirnfläche eine konische Vertiefung 15 auf.

Der hintere Abschnitt 14 besteht aus dem gleichen Material wie der vordere Abschnitt 13 und ist an seinem vorderen Ende (links in der FIG. 4) über ein Filmscharnier 16 klappbar mit dem hinteren Ende des vorderen Abschnitts 13 verbunden. Von der Stirnfläche dieses vorderen Endes ragt ein konischer Vorsprung 17 hervor, dessen Umfangsfläche zu der Umfangsfläche der konischen Vertiefung 15 passt. Vertiefung 15 und Vorsprung 17 stellen folglich korrespondiere Kopplungselemente dar, die eine Steckverbindung zwischen den beiden Abschnitten 13, 14 ermöglichen.

Der hintere Abschnitt 14 weist an seinem hinteren Ende (rechts in der FIG. 4) eine Daumenplatte 18 auf. In der FIG. 5 ist gut zu erkennen, dass die Daumenplatte 18 an ihrem unteren Rand eine Aussparung 19 aufweist, in der die Kartusche 6 aufgenommen wird, wenn der hintere Abschnitt 14 in der in der FIG. 4 gezeigten platzsparenden Stellung parallel eng neben der Kartusche 6 liegt. Die Öffnung der Aussparung 19 ist etwas schmaler als der Außendurchmesser der Kartusche 6, so dass die Aussparung 19 eine Klemmhalterung für die Kartusche 6 bildet. Am hinteren Ende des Mischrohrs 2 ist eine Fingerplatte 20 vorgesehen, die ebenfalls eine Aussparung (nicht dargestellt) für den hinteren Abschnitt 14 aufweisen kann, falls dieser in der platzsparenden Stellung neben dem Mischrohr 2 liegen sollte.

Die FIG. 6 zeigt den hinteren Abschnitt 14 in einer um ca. 45° aufgeklappten Stellung. Man kann sich leicht vorstellen, dass er auf Grund der Führung durch das Filmscharnier 16 nach einer Umklappbewegung von insgesamt 180° koaxial mit dem vorderen Abschnitt 13 fluchtet und mit seinem Vorsprung 17 in dessen Vertiefung 15 eingreift. Der Stempel 7 ist dann einsatzfertig zusammengesetzt und kann wie ein einteiliger Stempel in die Kartusche 6 gedrückt werden, um die darin enthaltenen Massen in das Mischrohr 2 auszubringen.

Die FIG. 7 zeigt eine Vorrichtung mit einem Stempel 7 in einer zweiten Ausführungsform, die sich dadurch von der ersten Ausführungsform der FIG. 4 unterscheidet, dass die Abschnitte 13, 14 voneinander getrennte Teile sind.

Der vordere Abschnitt 13 sitzt hier vollständig in dem hinteren Ende der Kartusche 6, so dass der links neben seinem hinteren Ende liegende Teil der Kartusche 6 als Führung für das vordere Ende des hinteren Abschnitts 14 dient, wenn dieses beim Zusammensetzen des Stempels 7 in die Kartusche 6 eingeschoben wird. Durch diese Führung kann die Knickgefahr beim Eindrücken des Stempels 7 in die Kartusche 6 verringert werden.

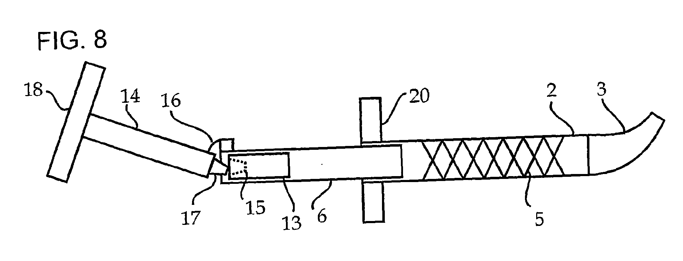

Die FIG. 8 zeigt eine Vorrichtung mit einem Stempel 7 in einer dritten Ausführungsform, die sich dadurch von der zweiten Ausführungsform der FIG. 7 unterscheidet, dass der hintere Abschnitt 14 an seinem vorderen Ende über ein Filmscharnier 16 klappbar mit dem hinteren Ende der Kartusche 6 verbunden ist. Das Filmscharnier 16 wird dabei gebrochen, wenn der hintere Abschnitt 14 aus der in der FIG. 8 gezeigten Stellung weiter in die koaxial fluchtende Stellung geklappt und dann in die Kartusche 6 gedrückt wird.

Falls der vordere Abschnitt 13, um einen Stopfen zu bilden, wenigstens teilweise aus einem anderen, zum Beispiel elastischeren Material als der hintere Abschnitt 14 besteht, so können beide Abschnitte 13, 14 im 2K-Spritzgussverfahren zunächst einstückig hergestellt und anschließend voneinander gelöst werden. Dies kann durch geeignete Wahl der beiden Materialien erzielt werden, wenn diese beim Aneinanderspritzen an ihren Grenzflächen eine lösbare Verbindung bilden. Ähnliche Effekte können auch durch geeignete Wahl der Spritzgießparameter oder durch Einsatz von Trennmitteln erreicht werden. Das Filmscharnier 16 kann dabei entweder aus dem Material des Stopfens oder aus dem Material des hinteren Abschnitts 14 gespritzt und im jeweils anderen Teil formschlüssig verankert sein.

Falls die Kartusche 6 zwei Kammern 9, 10 und folglich auch der Stempel 7 zwei nebeneinander liegende Stempelsegmente (FIG. 2) aufweist, so kann das Zusammensetzen des in zwei getrennte Abschnitte 13, 14 unterteilten Stempels 7 zum Beispiel dadurch erleichtert werden, dass die Trennwand 8 (FIG. 2), welche die beiden Kammern 9, 10 voneinander trennt, aus dem hinteren Ende der Kartusche 6 herausragt. Dann kann nämlich der Anwender zunächst die beiden Stempelsegmente an dieser herausragenden Trennwand 8 positionieren, indem er sie an die beiden Wandflächen anlegt, und dann in die Kartusche 6 einführen. Es ist auch möglich, dass die Stempelsegmente wenigstens an ihren vorderen Ende in einem Winkel zueinander gespreizt sind, wodurch ein größerer Freiheitsgrad bei der Positionierung geschaffen wird. Darüber hinaus können die Stempelsegmente auch über lösbare Abstandshalter, wie zum Beispiel Stege mit Sollbruchstellen, miteinander verbunden sein, die beim Eindrücken des Stempels 7 in die Kartusche zerbrechen. Des Weiteren kann an der Kartusche 6 eine Fingerplatte vorgesehen sein, die trichterförmig gestaltet ist, so dass die Stempelsegmente einfach eingeführt werden können.

### BEZUGSZEICHENLISTE

- 1: Vorrichtung
- 2: rohrförmiges Element, Mischrohr
- 3: Tülle
- 4: Anformung, Halteplatte
- 5: Mischwendel
- 6: Kartusche
- 7: Stempel
- 8: Trennwand
- 9, 10: Kammern
- 11: Verschluss- bzw. Dichtelemente
- 12: Retentionselemente
- 13: vorderer Abschnitt
- 14: hinterer Abschnitt
- 15: konische Vertiefung
- 16: Filmscharnier
- 17: konischer Vorsprung
- 18: Daumenplatte
- 19: Aussparung
- 20: Fingerplatte

## Patentansprüche

1. Vorrichtung zum lagern, Mischen und Ausbringen eine Masse, mit:
- einem sich zu einem Ende hin im Durchmesser verjüngenden Mischrohr (2);
- einer Mischwendel (5) in dem Mischrohr (2), die bestimmungsgemäß im Mischrohr unter Zuhilfenahme eines Kolbens, der in das Mischrohr eingeführt wird, zusammengedrückt werden kann oder soll;
- einer Kartusche (6) zur Lagerung mindestens einer zu mischenden Masse;
- einem Stempel (7), der gegebenenfalls in der Kartusche geführt werden kann,
wobei der Stempel (7) es ermöglicht, die in der Kartusche (6) gelagerten Komponenten in das Mischrohr (2) auszubringen, und wobei der Stempel (7) gegebenenfalls zusammen mit der Kartusche (6) nach dem Ausbringen der Komponenten den Kolben zum Zusammendrücken der Mischwendel bildet.

2. Vorrichtung nach Anspruch 1 umfassend, eine Applikationsvorrichtung mit einem Stempel, mit dem bestimmungsgemäß die sich im Mischrohr befindliche Mischwendel zusammengedrückt werden kann.

3. Vorrichtung nach Anspruch 1, wobei die Kartusche (6) seitlich versetzt zum Mischrohr (2) angeordnet ist und aus der die zu mischende Masse in das Mischrohr (2) überführt werden kann, und einen Stempel, mit dem bestimmungsgemäß die sich im Mischrohr (2) befindliche Mischwendel (5) zusammengedrückt werden kann, aufweist.

4. Vorrichtung nach einem der vorstehenden Ansprüche, wobei die Mischwendel (5) nach dem Strangteilungsprinzip funktioniert.

5. Vorrichtung nach dem vorstehenden Anspruch, wobei die Mischwendel (5) 2 bis 40 Strangteilungsabschnitte aufweist.

6. Vorrichtung nach einem der vorstehenden Ansprüche, wobei die Mischwendel (5) ein elastisches und/oder sprödes Material umfasst und/oder Sollbruchstellen bzw. Sollknickstellen aufweist.

7. Vorrichtung nach einem der vorstehenden Ansprüche, wobei die Mischwendel (5) Verschlusselemente (11) für eine Kartusche (6) aufweist.

8. Vorrichtung nach dem vorstehenden Anspruch, wobei das Verschlusselement (11) nach Art eines reversibel verdrehbaren Twist-Verschlusses ausgebildet ist.

9. Vorrichtung nach einem der vorstehenden Ansprüche, wobei die Kartusche (6) mindestens zwei Kammern (9, 10) aufweist.

10. Vorrichtung nach einem der vorstehenden Ansprüche, wobei die Kartusche (6) mindestens eine Trennwand (8) aufweist, die im Inneren hohl ist, bzw. zwei getrennte Trennwände aufweist, die gegebenenfalls mit einem Verbindungssteg verbunden sind.

11. Vorrichtung nach einem der vorstehenden Ansprüche, wobei die Kartusche (6) als Multilumenschlauch ausgebildet ist.

12. Vorrichtung nach einem der vorstehenden Ansprüche, umfassend mindestens ein Halteelement (4), das es ermöglicht, die Vorrichtung ähnlich einer Spritze zu handhaben.

13. Vorrichtung nach einem der vorstehenden Ansprüche in Form einer singel-unit-dose-Verpackung.

14. Vorrichtung nach einem der vorstehenden Ansprüche, wobei in der Kartusche (6) fließfähige Komponenten einer zu bereitenden Masse gelagert sind.

15. Vorrichtung nach dem vorstehenden Anspruch, wobei die Komponenten eine Viskosität im Bereich von 0,5x10⁻³ bis 50x10³ Pas aufweisen.

16. Vorrichtung nach einem der vorstehenden Ansprüche, wobei es sich bei der zu mischenden Masse um Bestandteile von Dentalmaterialien handelt.

17. Vorrichtung nach einem der vorhergehenden Ansprüche, **dadurch gekennzeichnet, dass** der Stempel (7) einen vorderen Abschnitt (13) und einen hinteren Abschnitt (14) aufweist.

18. Vorrichtung nach Anspruch 17, **dadurch gekennzeichnet, dass** die Abschnitte voneinander getrennte Teile sind.

19. Vorrichtung nach Anspruch 18, **dadurch gekennzeichnet, dass** der vordere Abschnitt (13) in dem hinteren Ende der Kartusche (6) sitzt, und dass der hintere Abschnitt (14) über wenigstens eine Brechverbindung mit der Kartusche (6) und/oder dem Mischrohr (2) verbunden ist.

20. Vorrichtung nach Anspruch 19, **dadurch gekennzeichnet, dass** der hintere Abschnitt (14) mit dem hinteren Ende der Kartusche (6) über eine Brechverbindung verbunden ist, die als Scharnier ausgebildet ist und bricht, während die beiden Abschnitte zu dem Stempel (7) zusammengesetzt werden oder während der aus den beiden Abschnitte zusammengesetzte Stempel (7) in die Kartusche (6) gedrückt wird.

21. Vorrichtung nach Anspruch 17, **dadurch gekennzeichnet, dass** die Abschnitte an ihren einander zugewandten Enden miteinander verbunden sind.

22. Vorrichtung nach Anspruch 21, **dadurch gekennzeichnet, dass** die Abschnitte an ihren einander zugewandten Enden klappbar miteinander verbunden sind.

23. Vorrichtung nach Anspruch 22, **dadurch gekennzeichnet, dass** die Abschnitte über ein Filmscharnier (16) miteinander verbunden sind.

24. Vorrichtung nach einem der Ansprüche 17 bis 23, **dadurch gekennzeichnet, dass** die Abschnitte an ihren einander zugewandten Enden korrespondierende Kopplungselemente aufweisen.

25. Vorrichtung nach Anspruch 24, **dadurch gekennzeichnet, dass** die Kopplungselemente eine Schraubverbindung oder eine Bajonettverbindung oder eine Steckverbindung ermöglichen.

26. Vorrichtung nach Anspruch 24 oder 25, **dadurch gekennzeichnet, dass** an den einander zugewandten Enden Rückhaltemittel vorgesehen sind, die ein Lösen der gekoppelten Enden erschweren.

27. Vorrichtung nach Anspruch 26, **dadurch gekennzeichnet, dass** die Rückhaltemittel Rastelemente aufweisen.

28. Vorrichtung nach einem der Ansprüche 17 bis 27, **dadurch gekennzeichnet, dass** der vordere Abschnitt einen Stopfen aufweist, der dicht in dem hinteren Ende der Kartusche (6) sitzt.

29. Vorrichtung nach einem der Ansprüche 17 bis 28, **dadurch gekennzeichnet, dass** der hintere Abschnitt (14) an seinem hinteren Ende eine Daumenplatte (18) mit einer Aussparung für die Kartusche (6) aufweist.

30. Vorrichtung nach einem der Ansprüche 17 bis 29, **dadurch gekennzeichnet, dass** das Mischrohr (2) an seinem hinteren Ende eine Fingerplatte (20) mit einer Aussparung für den hinteren Abschnitt aufweist.

31. Vorrichtung nach Anspruch 29 oder 30, **dadurch gekennzeichnet, dass** die Aussparung als Klemmhalterung ausgebildet ist.

32. Vorrichtung nach einem der vorhergehenden Ansprüche, **dadurch gekennzeichnet, dass** die Mischwendel (5) in einem vorderen Bereich steifer ist als in einem hinteren Bereich.

33. Vorrichtung nach Anspruch 32, **dadurch gekennzeichnet, dass** die Mischwendel (5) in einem vorderen Bereich eine größere Wandstärke hat als in einem hinteren Bereich.

34. Vorrichtung nach einem der vorhergehenden Ansprüche, **dadurch gekennzeichnet, dass** die Mischwendel (5) an ihrem hinteren Ende an dem Mischrohr (2) und/oder an der Kartusche (6) befestigt ist.

35. Vorrichtung nach einem der vorhergehenden Ansprüche, **dadurch gekennzeichnet, dass** die Mischwendel (5) sich mit ihrem vorderen Ende an dem Mischrohr (2) abstützt.

36. Vorrichtung nach Anspruch 35, **dadurch gekennzeichnet, dass** die Mischwendel an ihrem vorderen Ende an dem Mischrohr befestigt ist.

37. Vorrichtung nach Anspruch 35 oder 36, **dadurch gekennzeichnet, dass** das Mischrohr (2) einen von seiner Innenfläche radial einwärts vorspringenden Anschlag für das vordere Ende der Mischwendel (5) aufweist.

38. Verfahren zur Verwendung der Vorrichtung, umfassend die Schritte:
a) Bereitstellen einer Vorrichtung nach einem der vorstehenden Ansprüche 1 bis 37;
b) Ausbringen der in der Kartusche (6) gelagerten Masse durch Ausübung von Druck auf den in der Kartusche führbaren Stempel (7) in das Mischrohr (2); und
c) Verwenden des aus Stempel (7) und Kartusche (6) gebildeten Kolbens zum Ausbringen der im Mischrohr (2) befindlichen Masse.

39. Verfahren zur Verwendung der Vorrichtung, umfassend die Schritte:
a) Bereitstellen einer Vorrichtung nach einem der vorstehenden Ansprüche 1 bis 37,
b) Offnen der Kartusche (6),
c) Teilentleerung der in der Kartusche (6) gelagerten Masse in das Mischrohr,
d) Verschließen der Kartusche (6),
e) Ausbringen der Masse aus dem Mischrohr (2) durch Axialverschiebung des Stempels (7), wobei die Mischwendel (5) zusammengedrückt wird,
f) entgegen gesetzte Axialverschiebung des Stempels (7), wobei die zusammengedrückte Mischwendel (5) im wesentlichen wieder ihre Ausgangsform annimmt,
g) gegebenenfalls Wiederholung zumindest der Schritte a) bis f) bis die Kartusche (6) im wesentlichen entleert ist.

## Claims

1. Device for storing, mixing and dispensing a material, with:
- a mixing tube (2) which tapers in diameter toward one end;
- a mixing helix (5) in the mixing tube (2) which can or is intended to be compressed according to requirements in the mixing tube with the aid of a plunger which is inserted into the mixing tube;
- a cartridge (6) for storing at least one material to be mixed;
- a ram (7), which possibly can be guided in the cartridge,
the ram (7) making it possible to dispense the components stored in the cartridge (6) into the mixing tube (2), and the ram (7) possibly forming together with the cartridge (6) after the dispensing of the components the plunger for compressing the mixing helix.

2. Device according to claim 1 comprising an application device with a ram, with which the mixing helix located in the mixing tube can be compressed according to requirements.

3. Device according to claim 1, the cartridge (6) being arranged laterally offset with respect to the mixing tube (2) and from which the material to be mixed can be transferred into the mixing tube (2), and having a ram with which the mixing helix (5) located in the mixing tube (2) can be compressed according to requirements.

4. Device according to one of the preceding claims, the mixing helix (5) operating on the strand-dividing principle.

5. Device according to the preceding claim, the mixing helix having 2 to 40 strand-dividing sections.

6. Device according to one of the preceding claims, the mixing helix (5) comprising a flexible and/or brittle material and/or having predetermined breaking points or predetermined buckling points.

7. Device according to one of the preceding claims, the mixing helix (5) having closing elements (11) for a cartridge (6).

8. Device according to the preceding claim, the closing element (11) being designed in the manner of a reversibly turnable twist closure.

9. Device according to one of the preceding claims, the cartridge (6) having at least two chambers (9, 10).

10. Device according to one of the preceding claims, the cartridge (6) having at least one separating wall (8), which is hollow inside, or having two separate separating walls which are possibly connected by a connecting cross-piece.

11. Device according to one of the preceding claims, the cartridge (6) being designed as a multilumen tube.

12. Device according to one of the preceding claims, comprising at least one holding element (4), which makes it possible to handle the device in a way similar to a syringe.

13. Device according to one of the preceding claims in the form of a single-unit-dose pack.

14. Device according to one of the preceding claims, free-flowing components of a material to be prepared being stored in the cartridge (6).

15. Device according to the preceding claim, the components having a viscosity in the range of 0.5×10⁻³ to 50×10³ Pas.

16. Device according to one of the preceding claims, the material to be mixed being constituents of dental materials.

17. Device according to one of the preceding claims, **characterized in that** the ram (7) has a front portion (13) and a rear portion (14).

18. Device according to claim 17, **characterized in that** the portions are parts which are separate from each other.

19. Device according to claim 18, **characterized in that** the front portion (13) fits in the rear end of the cartridge (6), and **in that** the rear portion (14) is connected to the cartridge (6) and/or the mixing tube (2) by means of at least one breaking connection.

20. Device according to claim 19, **characterized in that** the rear portion (14) is connected to the rear end of the cartridge (6) by means of a breaking connection which is formed as a hinge and breaks while the two portions are being fitted together to form the ram (7) or while the ram (7) assembled from the two portions is being pressed into the cartridge (6).

21. Device according to claim 17, **characterized in that** the portions are connected to each other at their mutually facing ends.

22. Device according to claim 21, **characterized in that** the portions are connected to each other at their mutually facing ends in a pivotable manner.

23. Device according to claim 22, **characterized in that** the portions are connected to each other by means of a film hinge (16).

24. Device according to one of claims 17 to 23, **characterized in that** the portions have corresponding coupling elements at their mutually facing ends.

25. Device according to claim 24, **characterized in that** the coupling elements permit a screw connection or a bayonet connection or a plug-in connection.

26. Device according to claim 24 or 25, **characterized in that** restraining means, which hinder detachment of the coupled ends, are provided at the mutually facing ends.

27. Device according to claim 26, **characterized in that** the restraining means have latching elements.

28. Device according to one of claims 17 to 27, **characterized in that** the front portion has a plug, which fits tightly in the rear end of the cartridge (6).

29. Device according to one of claims 17 to 28, **characterized in that** the rear portion (14) has at its rear end a thumb plate (18) with a clearance for the cartridge (6).

30. Device according to one of claims 17 to 29, **characterized in that** the mixing tube (2) has at its rear end a finger plate (20) with a clearance for the rear portion.

31. Device according to claim 29 or 30, **characterized in that** the clearance is designed as a clamping securement.

32. Device according to one of the preceding claims, **characterized in that** the mixing helix (5) is more rigid in a front region than in a rear region.

33. Device according to claim 32, **characterized in that** the mixing helix (5) has a greater wall thickness in a front region than in a rear region.

34. Device according to one of the preceding claims, **characterized in that** the mixing helix (5) is fastened at its rear end to the mixing tube (2) and/or to the cartridge (6).

35. Device according to one of the preceding claims, **characterized in that** the mixing helix (5) is supported by its front end on the mixing tube (2).

36. Device according to claim 35, **characterized in that** the mixing helix is fastened at its front end to the mixing tube.

37. Device according to claim 35 or 36, **characterized in that** the mixing tube (2) has a stop for the front end of the mixing helix (5), projecting radially inward from its inner surface.

38. Method for using the device, comprising the steps of:
a) providing a device according to one of the preceding claims 1 to 37;
b) dispensing the material stored in the cartridge (6) into the mixing tube (2) by exerting pressure on the ram (7), which can be guided in the cartridge; and
c) using the plunger, formed by the ram (7) and the cartridge (6), for dispensing the material located in the mixing tube (2).

39. Method for using the device, comprising the steps of:
a) providing a device according to one of the preceding claims 1 to 37,
b) opening the cartridge (6),
c) partial emptying of the material stored in the cartridge (6) into the mixing tube,
d) closing the cartridge (6),
e) dispensing the material from the mixing tube (2) by axial displacement of the ram (7), with the mixing helix (5) being compressed,
f) axial displacement of the ram (7) in the opposite direction, with the compressed mixing helix (5) substantially resuming its original shape,
g) if appropriate, repetition of at least steps a) to f) until the cartridge (6) has been substantially emptied.

## Revendications

1. Dispositif de stockage, de mélange et de distribution d'une masse, avec:
- un tube de mélange (2) dont le diamètre se rétrécit en direction d'une extrémité;
- une spirale de mélange (5) dans le tube de mélange (2) laquelle peut ou doit être comprimé conformément à sa destination dans le tube de mélange en s'aidant d'un piston qui est introduit dans le tube de mélange;
- une cartouche (6) pour le stockage d'au moins une masse à mélanger;
- un poinçon (7) qui peut le cas échéant être guidé dans la cartouche,
le poinçon (7) permettant de distribuer dans le tube de mélange (2) les composants stockés dans la cartouche (6) et le poinçon (7) constituant le cas échéant avec la cartouche (6), après la distribution des composants, le piston pour comprimer la spirale de mélange.

2. Dispositif selon la revendication 1, comprenant un dispositif applicateur avec un poinçon qui permet de comprimer conformément à la destination la spirale de mélange se trouvant dans le tube de mélange.

3. Dispositif selon la revendication 1, la cartouche (6) étant disposée avec un décalage latéral par rapport au tube de mélange (2) et depuis laquelle la masse à mélanger peut être transférée dans le tube de mélange (2) et ayant un poinçon qui permet de comprimer conformément à la destination la spirale de mélange (5) se trouvant dans le tube de mélange (2).

4. Dispositif selon l'une quelconque des revendications précédentes, dans lequel la spirale de mélange (5) fonctionne suivant le principe de la division de cordon.

5. Dispositif selon la revendication précédente, dans lequel la spirale de mélange comporte 2 à 40 sections de division de cordon.

6. Dispositif selon l'une quelconque des revendications précédentes, dans lequel la spirale de mélange (5) contient une matière élastique et/ou friable et/ou présente des points de rupture théoriques ou des points de pliure théoriques.

7. Dispositif selon l'une quelconque des revendications précédentes, dans lequel la spirale de mélange (5) comporte des éléments de fermeture (11) pour une cartouche (6).

8. Dispositif selon la revendication précédente, dans lequel l'élément de fermeture (11) est réalisé à la manière d'une fermeture à torsion pouvant être tournée de manière réversible.

9. Dispositif selon l'une quelconque des revendications précédentes, dans lequel la cartouche (6) comporte au moins deux chambres (9,10).

10. Dispositif selon l'une quelconque des revendications précédentes, dans lequel la cartouche (6) comporte au moins une paroi séparatrice (8) qui est creuse à l'intérieur ou deux parois séparatrices séparées qui sont reliées le cas échéant par une traverse de liaison.

11. Dispositif selon l'une quelconque des revendications précédentes, dans lequel la cartouche (6) est réalisée sous forme d'un tuyau à lumen multiple.

12. Dispositif selon l'une quelconque des revendications précédentes, comprenant au moins un élément de retenue (4) qui permet de manipuler le dispositif comme une seringue.

13. Dispositif selon l'une quelconque des revendications précédentes, se présentant sous la forme d'un emballage à dose unique.

14. Dispositif selon l'une quelconque des revendications précédentes, dans lequel des composants fluides d'une masse à préparer sont stockés dans la cartouche (6).

15. Dispositif selon la revendication précédente, dans lequel les composants présentent une viscosité de l'ordre de 0,5x10⁻³ à 50x10³ Pas.

16. Dispositif selon l'une quelconque des revendications précédentes, dans lequel il s'agit, en ce qui concerne la masse à mélanger, de composantes de matières dentaires.

17. Dispositif selon l'une quelconque des revendications précédentes, **caractérisé en ce que** le poinçon (7) comporte une section avant (13) et une section arrière (14).

18. Dispositif selon la revendication 17, **caractérisé en ce que** les sections sont des pièces séparées l'une de l'autre.

19. Dispositif selon la revendication 18, **caractérisé en ce que** la section avant (13) est située dans l'extrémité arrière de la cartouche (6) et que la section arrière (14) est reliée par au moins une connexion à rupture à la cartouche (6) et/ou au tube de mélange (2).

20. Dispositif selon la revendication 19, **caractérisé en ce que** la section arrière (14) est reliée à l'extrémité arrière de la cartouche (6) par une connexion à rupture qui est réalisée sous forme de charnière et casse pendant que les deux sections sont assemblées au poinçon (7) ou pendant que le poinçon (7) composé des deux sections est enfoncé dans la cartouche (6).

21. Dispositif selon la revendication 17, **caractérisé en ce que** les sections sont reliées entre elles par leurs extrémités tournées l'une vers l'autre.

22. Dispositif selon la revendication 21, **caractérisé en ce que** les sections sont reliées entre elles de manière rabattable par leurs extrémités tournées l'une vers l'autre.

23. Dispositif selon la revendication 22, **caractérisé en ce que** les sections sont reliées entre elles par une charnière en film (16).

24. Dispositif selon l'une quelconque des revendications 17 à 23, **caractérisé en ce que** les sections comportent, à leurs extrémités tournées l'une vers l'autre, des éléments de couplage correspondants.

25. Dispositif selon la revendication 24, **caractérisé en ce que** les éléments de couplage permettent une connexion par vis ou une connexion par baïonnette ou une connexion par fichage.

26. Dispositif selon la revendication 24 ou 25, **caractérisé en ce qu'**il est prévu aux extrémités tournées l'une vers l'autre des moyens de retenue qui rendent difficile une dissociation des extrémités couplées.

27. Dispositif selon la revendication 26, **caractérisé en ce que** les moyens de retenue comportent des éléments d'enclenchement.

28. Dispositif selon l'une quelconque des revendications 17 à 27, **caractérisé en ce que** la section avant comporte un bouchon qui est posé hermétiquement dans l'extrémité arrière de la cartouche (6).

29. Dispositif selon l'une quelconque des revendications 17 à 28, **caractérisé en ce que** la section arrière (14) comporte à son extrémité arrière une plaque à pouce (18) pourvue d'un évidement pour la cartouche (6).

30. Dispositif selon l'une quelconque des revendications 17 à 29, **caractérisé en ce que** le tube de mélange (2) comporte à son extrémité arrière une plaque digitale (20) pourvue d'un évidement pour la section arrière.

31. Dispositif selon la revendication 29 ou 30, **caractérisé en ce que** l'évidement est réalisé sous forme d'une fixation à serrage.

32. Dispositif selon l'une quelconque des revendications précédentes, **caractérisé en ce que** la spirale de mélange (5) est plus rigide dans sa zone avant que dans sa zone arrière.

33. Dispositif selon la revendication 32, **caractérisé en ce que** la spirale de mélange (5) a une plus forte épaisseur de paroi dans sa zone avant que dans sa zone arrière.

34. Dispositif selon l'une quelconque des revendications précédentes, **caractérisé en ce que** la spirale de mélange (5) est fixée par son extrémité arrière au tube de mélange (2) et/ou à la cartouche (6).

35. Dispositif selon l'une quelconque des revendications précédentes, **caractérisé en ce que** la spirale de mélange (5) s'appuie par son extrémité avant au tube de mélange (2).

36. Dispositif selon la revendication 35, **caractérisé en ce que** la spirale de mélange est fixée par son extrémité avant au tube de mélange.

37. Dispositif selon la revendication 35 ou 36, **caractérisé en ce que** le tube de mélange (2) comporte une butée saillant radialement vers l'intérieur depuis sa surface interne pour l'extrémité avant de la spirale de mélange (5).

38. Procédé d'utilisation du dispositif, comprenant les étapes suivantes :
a) élaboration d'un dispositif selon l'une quelconque des revendications précédentes 1 à 37 ;
b) distribution de la masse stockée dans la cartouche (6) dans le tube de mélange (2) en exerçant de la pression sur le poinçon (7) pouvant être guidé dans la cartouche ; et
c) utilisation du piston formé du poinçon (7) et de la cartouche (6) pour distribuer la masse se trouvant dans le tube de mélange (2).

39. Procédé d'utilisation du dispositif, comprenant les étapes suivantes :
a) élaboration d'un dispositif selon l'une quelconque des revendications précédentes 1 à 37 ;
b) ouverture de la cartouche (6);
c) vidage partiel de la masse stockée dans la cartouche (6) dans le tube de mélange ;
d) fermeture de la cartouche (6);
e) distribution de la masse depuis le tube de mélange (2) par décalage axial du poinçon (7), la spirale de mélange (5) étant alors comprimée ;
f) décalage axial opposé du poinçon (7), la spirale de mélange (5) comprimée reprenant sensiblement sa forme de départ ;
g) le cas échéant, répétition au moins des étapes a) à f) jusqu'à ce que la cartouche (6) soit sensiblement vide.
